# EUROPÄISCHE PATENTSCHRIFT

(11) **EP 1 079 542 B1**
(45) Veröffentlichungstag und Bekanntmachung des Hinweises auf die Patenterteilung: **05.10.2005**
(21) Anmeldenummer: 99106365.2
(22) Anmeldetag: 29.03.1999
(51) Int. Cl.: H04B 7/02, H04B 7/005

(54) **Sendeleistungsregelung in einem Mobilkommunikationssytem**
Transmit power control in a mobile communication system
Contrôle de la puissance d'émission dans un système de communication mobile

(43) Veröffentlichungstag der Anmeldung: 28.02.2001
(73) Patentinhaber: ALCATEL, 75008 Paris (FR)
(72) Erfinder: Jeschke, Michael, 70197 Stuttgart (DE); Mortensen, Ivar Dr., 70825 Korntal (DE)
(74) Vertreter: Kugler, Hermann

(56) Entgegenhaltungen:
- WO-A-97/17769
- WO-A-98/56200
- MICHEL MOULY ET AL: "GSM - The System for Mobile Communications" GSM SYSTEM FOR MOBILE COMMUNICATIONS, Seiten 190, 342-346, XP002101339 MOULY M;PAUTET M-B

## Beschreibung

Es sind Mobilkommunikationssysteme, insbesondere zellulare Mobilkommunikationssysteme, bekannt, die mehrere Funkfeststationen enthalten, die mit Mobilstationen kommunizieren. Falls mindestens zwei Funkfeststationen gleichzeitig mit derselben Mobilstation kommunizieren, findet eine sogenannte Macrodiversity-Funkübertragung statt. Diese Art der Funkübertragung wird etwa bei CDMA-Mobilkommunikationssystemen (CDMA: code division multiple access) angewendet. Auch in dem geplanten Mobilkommunikationssystem UMTS (universal mobile telecommunications system) soll eine Macrodiversity-Funkübertragung zumindest während des Weiterleitens der Mobilstation von einer Funkfeststation zur nächsten stattfinden. Im UMTS muß die Sendeleistung der Funkfeststationen möglichst schnell an die variierenden Funkkanaleigenschaften, die etwa durch Funkschwund (fading) verursacht werden, angepaßt werden. Hierzu sendet die Mobilstation einen Befehl, den sogenannten TPC-Befehl (TPC: transmit power control), an alle sie versorgenden Funkfeststationen, die wiederum in Reaktion darauf ihre Sendeleistung ändern. Die Änderung erfolgt durch Erhöhung oder durch Senkung des Sendeleistungspegels um einen vorgegebenen Betrag von z.B. 1 dB.

Die Patentanmeldung Nr. WO98/56200 beschreibt eine Sendeleistungsregelung, die die Sendeleistung von Basisstationen in Macrodiversität Fall kontrolliert. Wenn eine erste und eine zweite Basisstation in Macrodiversitätbeziehung zu einer Mobilstation stehen, senden die erste und zweite Basisstationen erste und zweite Berichte zu einem Kontroller, der die erste und zweite Berichte vergleicht, damit er Anpassungsbefehle zu der erste und zweite Basisstationen senden kann. Diese Methode ist insbesondere für CDMA anwendbar.

Die Patentanmeldung Nr. WO97/17769 beschreibt eine Methode zur Sendeleistungsregelung für ein Telefonsystem wobei ein Empfänger in der Lage ist, die Leistung einer empfangenen Nachricht zu messen und eine Sendeleistungsregelung Nachricht zu dem Sender zu schicken, die dazu gerichtet ist die Sendeleistung beim Sender während der Kommunikation anzupassen.

Die Erfindung geht von der Erkenntnis aus, daß folgendes Problem im Falle von falsch detektierten TPC-Befehlen auftritt: Empfängt eine der Funkfeststationen den TPC-Befehl falsch, so ändert diese ihre Sendeleistung entsprechend falsch, im Vergleich zu denjenigen Funkfeststationen, die den TPC-Befehl richtig empfangen. Das bedeutet, daß diese einzelne Funkfeststation ihre Sendeleistung gegensinnig zu den anderen Funkfeststationen ändert. Demnach driften die Sendeleistungspegel nach der Art eines sogenannten "random walks" auseinander. Diese Drift verringert den gewünschten Macrodiversity-Gewinn. Um nun diese Drift zu verhindern, wird erfindungsgemäß vorgeschlagen, für jede Funkfeststation einen individuellen Zielwert vorzugeben, von dem der Sendeleistungspegel im langfristigen Mittel möglichst nicht abweichen sollte. Jede Funkfeststation ändert ihre Sendeleistung in Richtung dieses ihr vorgegebenen Zielwertes. Dadurch wird zusätzlich zu der bekannten Regelschleife für die Sendeleistungsregelung eine weitere Regelschleife vorgeschlagen, die abhängig von einem von außen vorgegeben Zielwert durchlaufen wird. Durch diese Maßnahme wird auch bei schlechten Empfangsverhältnissen ein hoher Macrodiversity-Gewinn erreicht. Diese zweite Regelschleife kann völlig unabhängig vom Empfang des Befehls durchlaufen werden.

Im folgenden wird die Erfindung und die sich daraus ergebenden Vorteile anhand eines Ausführungsbeispiels näher beschrieben. Dazu wird auf die folgenden schematischen Darstellungen Bezug genommen:
- Fig. 1a,: die den Aufbau eines herkömmlichen Mobilkommunikationssystems zeigt;
- Fig. 1b,: die den zeitlichen Verlauf der Sendeleistungspegel zeigt mit der herkömmlicherweise auftretenden Drift;
- Fig.2a,: die den Aufbau eines erfindungsgemäßen Mobilkommunikationssystems zeigt;
- Fig.2b,: die den zeitlichen Verlauf der Sendeleistungspegel zeigt, den ein erfindungsgemäßes Verfahren bewirkt;
- Fig.3,: die ein Ablaufdiagramm für das erfindungsgemäße Verfahren zeigt.

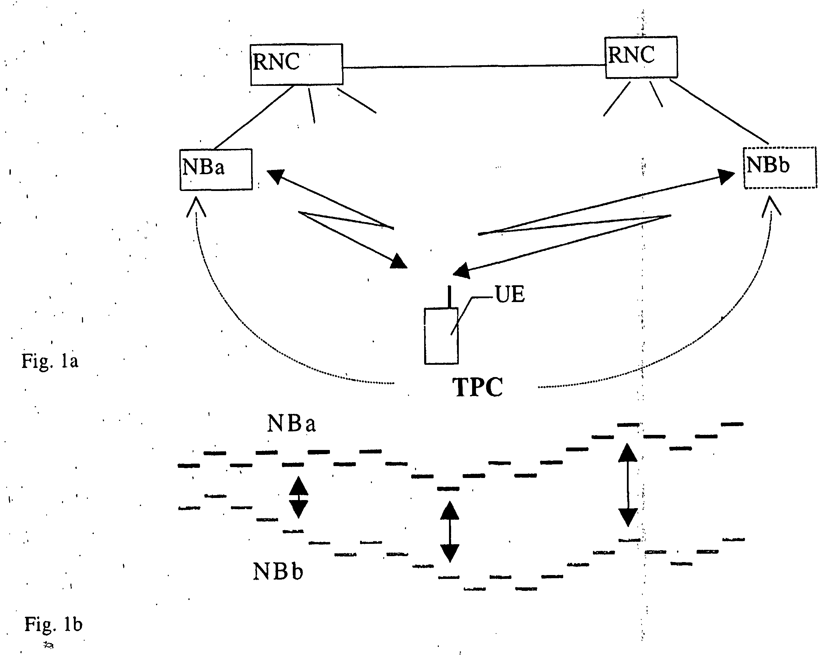

Die Fig.1a zeigt ein herkömmliches Mobilkommunikationssystem mit mindestens zwei Funkfeststationen NBa und NBb, die über ein Steuerungsnetzwerk miteinander verbunden sind und die mit einer Mobilstation UE kommunizieren. Das Steuerungsnetzwerk enthält sogenannte radio network controller RNC, über die die Funkfeststationen miteinander und mit Telekommunikationsnetzen, wie etwa dem PSTN (public switched telephone network) verbunden werden. In der Fig.1a ist der Fall dargstellt, daß die beiden Funkfeststationen NBa und NBb zumindest zeitweise gleichzeitig mit der einen Mobilstation UE kommunizieren. Es ist also eine Macrodiversity-Situation dargestellt, bei der die Funkfeststationen NBa und NBb gleichzeitig Funksignale mit der Mobilstation UE austauschen. Zur Regelung der Sendeleistung in den einzelnen Funkfeststationen gibt die Mobilstation UE in regelmäßigen Abständen einen einheitlichen Befehl, nämlich den sogenannten TPC-Befehl, an die beiden Funkfeststationen NBa und NBb. Diese werten den empfangenen TPC-Befehl aus und ändern ihre Sendeleistung. Der TPC-Befehl zeigt an, ob die Sendeleistung erhöht oder verringert werden soll. Nur wenn beide Funkfeststationen den TPC-Befehl korrekt empfangen, ändern sie ihre Sendeleistung gleichsinnig.

In Fig. 1b ist der zeitliche Verlauf der Sendeleistungspegel für die beiden Funkfeststationen NBa und NBb dargestellt, der sich ergibt, wenn von Zeit zu Zeit ein fehlerhafter Empfang des TPC-Befehls auftritt. Aufgrund der nicht gleichsinnigen Änderungen der Sendeleistungen driften die beiden Sendeleistungspegel allmählich auseinander.

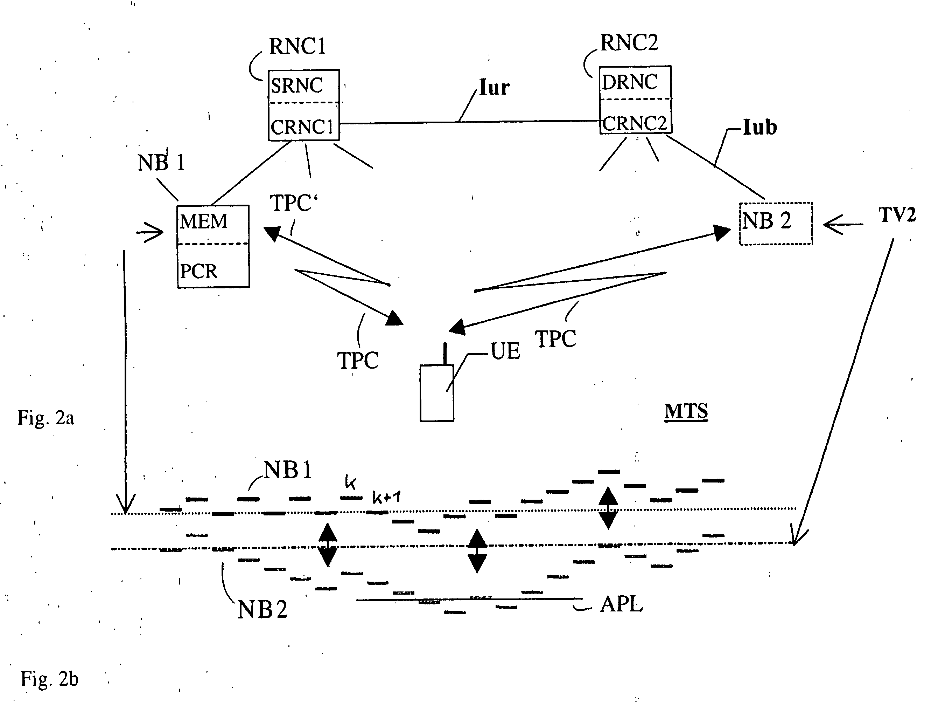

Die Fig.2a zeigt den Aufbau eines erfindungsgemäßen Mobilkommunikationssystems MTS, bei dem dieses Problem nicht auftritt. Das Mobilkommunikationssystem enthält mehrere Funkfeststationen, von denen lediglich zwei NB1 und NB2 dargestellt sind. Diese beiden Funkfeststationen NB1 und NB2 sind über ein Steuerungsnetzwerk miteinander verbunden und kommunizieren zumindest zeitweise gleichzeitig mit einer Mobilstation UE. Das bedeutet, daß zumindest zeitweise eine Macrodiversity-Funkübertragung stattfindet. Das Steuerungsnetzwerk enthält zwei radio network controller RNC1 und RNC2, die die Funkfeststationen NB1 und NB2 miteinander verbinden und von denen der eine RNC1 eine Verbindung zu einem nicht dargestellten Telekommunikationsnetz herstellt. Diese radio network controller RNC1 und RNC2 lassen sich jeweils in zwei Funktionseinheiten unterteilen: Der erste radio network controller RNC1 hat eine erste Funkfeststationssteuerung SRNC, die die oben genannte Macrodiversity-Funkübertragung leitend überwacht. Der zweite radio network controller RNC2 hat eine zweite Funkfeststationssteuerung DRNC, die die erste Funkfeststationssteuerung SRNC dabei unterstützt. Diese Funkfeststationssteuerung SRNC und DRNC steuern demnach Funktionen, die das Macrodiversity für die Mobilstation UE betreffen.

Außerdem enthalten die beiden radio network controller RNC1 und RNC2 jeweils eine weitere Funkfeststationssteuerung CRNC1 bzw. CRNC2, die im wesentlichen auf Überwachung der Funkübertragungen von den damit verbundenen Funkfeststationen gerichtet sind, etwa auf das radio resource management, und nicht auf die Steuerung der Macrodiversity-Funktionen.

Die Signalisierung zwischen den beiden radio network controllern RNC1 und RNC2 erfolgt über eine erste Schnittstelle lur. Die Signalisierung zwischen einem der radio network controllern RNC1 oder RNC2 und einer der Funkfeststationen NB1 bzw. NB2 erfolgt jeweils über eine zweite Schnittstelle lub. Die Schnittstellen lur und lub werden später noch näher beschrieben.

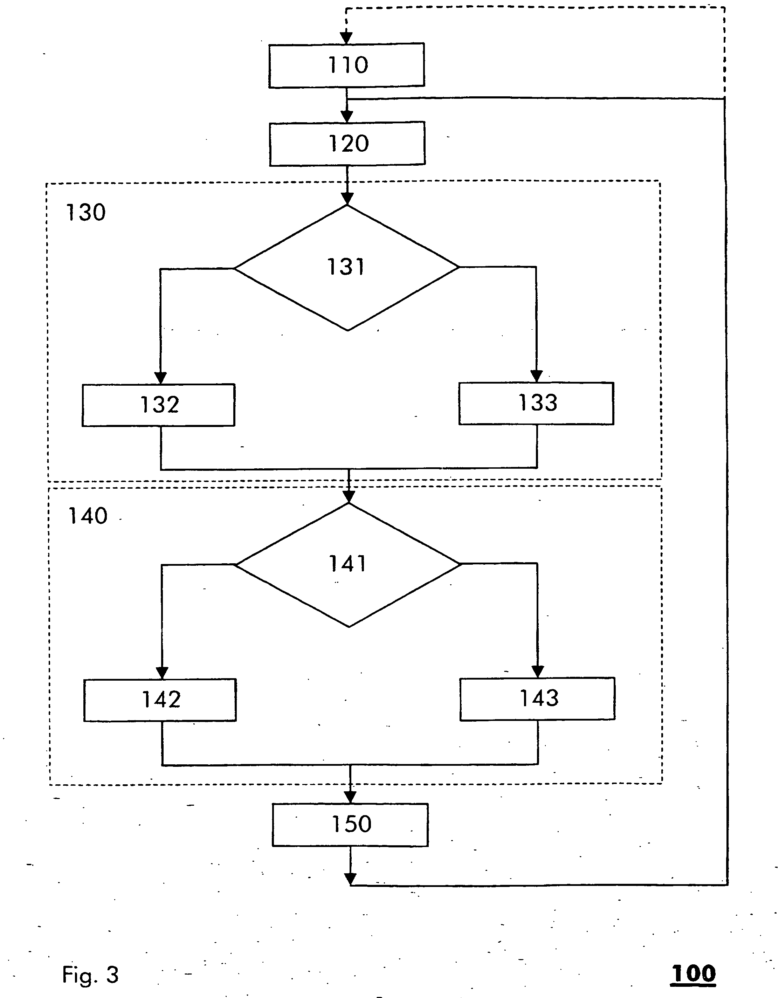

Eine jede der beiden Funkfeststationen NB1 und NB2 ändert ihre Sendeleistung nach einem erfindungsgemäßen Verfahren, bei dem ein Zielwert TV1 bzw. TV2 von der ersten Funkfeststationssteuerung SRNC vorgegeben wird. Das Verfahren wird nun anhand der Fig.3 noch näher beschrieben, wobei auch auf Fig. 2b Bezug genommen wird, die den Effekt dieses Verfahrens veranschaulicht.

Die Fig.2b zeigt den zeitlichen Verlauf der Sendeleistungspegel, die aufgrund der erfindungsgemäßen Maßnahmen nicht auseinander driften, sondern sich an einem der für die Funkfeststationen vogegebenen Zielwerte TV1 oder TV2 orientieren. Die Darstellung in Fig.2b geht von demselben Fehlermuster beim Empfang der TPC-Befehle aus, wie die Darstellung in Fig.1b. Im Vergleich der beiden Figuren sieht man deutlich die Verbesserung, die durch die Vorgabe der Zielwerte auftritt.

Die Fig.3 zeigt das Ablaufdiagramm für ein Verfahren 100 zum Ändern der Sendeleistung in einer Funkfeststation. Unter dem Begriff "Sendeleistung" wird hier die Sendeleistung verstanden, die in Abwärtsrichtung für die Bereitstellung derjenigen Funkdienste benötigt wird, welche über Macrodiversity-Funkkanäle abgewickelt werden. Hierbei werden die von einer einzelnen Mobilstation genutzten Funkdienste betrachtet, wobei sich die Sendeleistung auf eine der Funkzellen bezieht, die von einer der Funkfeststationen versorgt wird.

Das Verfahren 100 bezieht sich auf die Änderung der Sendeleistung in der Funkfeststation NB1 nach Fig 2a, auf die hier auch Bezug genommen wird, und enthält die Schritte 110 bis 150. Die Funkübertragung erfolgt im Zeitmultiplex und die Durchführung des Verfahrens 100 wird hier für die Zeitdauer von zwei Zeitschlitzen k und k + 1 betrachtet.

In einem ersten Schritt 110 wird von dem Funkfeststationssteuerung SRNC ein Zielwert TV1 für die Funkfeststation NB1 vorgegeben. Der Zielwert TV1 kann fest oder variabel sein und wird in einem Speicher MEM abgelegt, auf den eine Sendeleistungssteuerung PCR zugreift (siehe Fig. 2a).

In Zeitschlitz k wird in Abwärtsrichtung ein Nutzdaten-Funksignal von beiden Funkfeststationen NB1 und NB2 gleichzeitig an die Mobilstation UE gesendet. Die Funkfeststation NB1 sendet dieses Funksignal mit einer Sendeleistung von beispielsweise 20dBm und die Funkfeststation NB2 mit einer Sendeleistung von beispeilsweise 18 dBm.

In einem Schritt 120 wird von der Mobilstation UE in Aufwärtsrichtung ein Befehl TPC gesendet, um den beiden Funkfeststationen NB1 und NB2 anzuzeigen, daß die Sendeleistung geändert werden muß. In diesem Beispiel wünscht die Mobilstation eine Erhöhung der Sendeleistung für den nächsten Zeitschlitz k+ 1.

In einem Schritt 130 wird zunächst die Änderung der Sendeleistung in herkömmlicher Weise durchgeführt, die hier am Beispiel der Funkfeststation NB1 näher beschrieben wird: Die Funkfeststation NB1 wertet in einem Teilschritt 131 den von ihr empfangenen Befehl TPC' aus. Falls sie den Befehl richtig empfangen hat, d.h. falls der empfangene Befehl TPC' gleich dem gesendeten Befehl TPC ist, stellt sie fest, daß die Sendeleistung erhöht werden muß und geht zu einem Teilschritt 132, wo sie die Sendeleistung um einen fest vorgegebenen Betrag von 1 dB erhöht. Falls der Befehl jedoch nicht richtig empfangen wird (TPC' nicht gleich TPC), wird in einem Teilschritt 133 die Sendeleistung - entgegen dem Wunsch der Mobilstation - verringert. Diese Absenkung des Sendeleistungpegels beträgt -1 dB.

In dem Schritt 130 wird also die Sendeleistung lediglich durch Berücksichtigung des empfangenen Befehls TPC' geändert.

Es folgt nun ein weiterer Schritt 140, bei dem von der Funkfeststation die Sendeleistung zusätzlich anhand des ihr vorgegebenen Zielwertes TV1 geändert wird. Dazu wird von der Funkfeststation NB1 geprüft, ob der zuletzt im Zeitschlitz k benutzte Sendeleistungspegel von 20 dBm kleiner oder größer ist als der Zielwert TV1. Hier hat der Zielwert TV1 den Betrag von 17 dBm. Danach wird im Teilschritt 142 die Sendeleistung etwas erhöht oder im Teilschritt 143 etwas verringert, um sich dem Zielwert zu nähern. In diesem Beispiel ist der momentane Sendeleistungpegel größer als der Zielwert TV1, so daß der Teilschritt 143 durchgeführt wird.

Im Vergleich zu der zuvor beschriebenen Veränderung der Sendeleistung gemäß Schritt 130 ist diese zusätzliche Veränderung gemäß Schritt 140 geringer und beträgt nur ± 0,2 dB. Dieser Änderungsbetrag ist variabel und vorzugsweise dann besonders groß, wenn die Abweichung des Sendeleistungspegels vom vorgegebenen Zielwert groß ist. Beispielsweise ist der Änderungsbetrag gleich ± 0,5 dB, wenn der Sendeleistungspegel um mehr als 7 dB vom Zielwert abweicht. Der Änderungsbetrag wird von der Funkfeststation ermittelt. Der Zielwert hingegen wird von der leitenden ersten Funkfeststationssteuerung SRNC vorgegeben.

Die in Fig. 2a dargestellte Funkfeststationssteuerung SRNC berechnet beispielsweise den Zielwert TV2 für die Funkfeststation NB2. Dabei können verschiedene Kriterien herangezogen werden:
- Die Funkfelddämpfung in Abwärtsrichtung.
- Die in Abwärtsrichtung innerhalb der Funkzelle von NB2 vorhandene Verkehrslast. Diese wird von der Funkfeststation NB2 oder von der damit verbundenen Funkfeststationssteuerung CRNC2 ermittelt und wird der leitenden Funkfeststationssteuerung SRNC mitgeteilt.
- Die über einen längeren Zeitraum gemittelte Sendeleistung (siehe in Fig. 2b die durchgezogene Linie). Diese mittlere Sendeleistung APL wird der ersten Funkfeststationssteuerung SRNC von der Funkfeststation NB2 mitgeteilt.

Die Übermittlung des Zielwertes TV2 von der Funkfeststationssteuerung SRNC zu der Funkfeststation NB2 kann erfolgen in Form:
- eines absoluten Wertes angegeben in dBm oder in Watt, oder
- eines relativen Wertes angegeben in dB.

Der relative Wert kann sich beziehen auf die in Abwärtsrichtung von der Funkfeststation NB2 aufgebrachten Gesamtsendeleistung. Der relative Wert kann sich auch beziehen auf einen Bezugwert, der sich ergibt aus der für alle Nutzdaten-Funkkanäle in der Funkzelle von der Funkfeststation NB2 aufgebrachten Sendeleistung abzüglich der Sendeleistung für die gemeinsamen Funkkanäle, wie etwa für den Rundspruchsignalisierungskanal oder für den Suchrufkanal. In den beiden zuletzt genannten Fällen ist es notwendig, daß die Funkfeststation NB2 den zeitlich schwankenden Bezugswert über einen angemessenen Zeitraum mittelt und diesen gemittelten Bezugwert regelmäßig an die Funkfeststationssteuerung SRNC übermittelt.

Vorzugsweise werden hier unmittelbar nach dem Aufbau der Kommunikation zwischen der Mobilstation UE und der Funkfeststation NB2, von dieser die Nutzdaten-Funksignale mit einer Anfangssendeleistung gesendet, die dem bereits vorgegeben Zielwert TV2 für diese Funkfeststation NB2 entspricht.

Außerdem wird von jeder der Funkfeststationen ein zulässiger Sendepegelbereich ermittelt in Abhängigkeit von dem ihr übermittelten Zielwert. Der Zielwert liegt vorzugweise in der Mitte des Sendepegelbereichs. Die Amplitudenspanne des Bereichs hat einen vorgegebenen Wert 15 dB.

Es ist denkbar, daß von der leitenden Funkfeststationssteuerung an jede der Funkfeststationen Werte für einen zulässigen Sendepegelbereich übermittelt werden, und daß danach von jeder der Funkfeststationen ihr Zielwert in Abhängigkeit von den.ihr übermittelten Werten ermittelt wird,

Das beschriebene Verfahren kann besonders vorteilhaft eingesetzt werden bei der Funkübertragung nach dem sogannnten SSDT-Modus (site selection diversity transmit power control), der an sich aus der Standardisierung vom UMTS bekannt ist:

Beim SSDT-Modus sendet eine Funkfeststation, die an einer Macrodiversity-Funkübertragung beteiligt ist, den Steuerungsteil (control part) der Signale mit einem ersten Sendeleistungspegel (power P1). Im SSDT-Modus wird nun der Datenteil (data part) mit diesem Sendeleistungspegel (P1) nur dann gesendet, wenn die Funkfeststation eine sogenannte primary cell versorgt. Wird der Status gewechselt und eine sogenannte non-primary cell versorgt, dann wird der Datenteil mit einem zweiten geringeren Sendeleistungspegel (P2<P1) gesendet, der sogar Null sein kann (P2=0). Für den SSDT-Modus, läßt sich die geschilderte Erfindung auf jede Funkfeststation dadurch anwenden, daß der ihr mitgeteilte Zielwert als Vorgabe für den ersten Sendeleistungspegel (P1) aufgefaßt wird.

## Patentansprüche

1. Verfahren (100) zum Ändern der Sendeleistung in mindestens zwei Funkfeststationen (NB1, NB2), die innerhalb eines Mobilkommunikationssystems (MTS) zumindest zeitweise gleichzeitig mit einer Mobilstation (UE) kommunizieren, bei dem von der Mobilstation (UE) an die Funkfeststationen (NB1, NB2) ein Befehl (TPC) gesendet wird (120), der die Funkfeststationen (NB1, NB2) anweist ihre Sendeleistung zu verändern, bei dem in jeder (NB1) der Funkfeststationen aufgrund eines Empfangs des Befehls (TPC) die Sendeleistung verändert wird (130), **dadurch gekennzeichnet dass** bei dem Empfang des Befehls in jeder (NB1) der Funkfeststationen die Sendeleistung zusätzlich in Richtung eines vorgebbaren Zielwerts (TV1) verändert wird (140).

2. Verfahren (100) nach Anspruch 1,
bei dem die Zielwerte (TV1, TV2) von einer Funkfeststationssteuerung (SRNC) ermittelt und an die Funkfeststationen (NB1, NB2) übermittelt werden (110).

3. Verfahren nach Anspruch 2,
bei dem von der Funkfeststation (NB1) die Sendeleistung über einen Zeitraum gemittelt wird und die sich daraus ergebende gemittelte Sendeleistung (APL) an die erste Funkfeststationssteuerung (SRNC) kontinuierlich übermittelt wird, um daraus den Zielwert (TV1) zu ermitteln.

4. Verfahren nach Anspruch 1,
bei dem unmittelbar nach dem Aufbau der Kommunikation zwischen der Mobilstation (UE) und einer (NB2) der Funkfeststationen, von dieser Funksignale mit einer Anfangssendeleistung gesendet werden, die dem Zielwert (TV2) für diese Funkfeststation (NB2) entspricht.

5. Verfahren nach Anspruch 2,
bei dem von jeder (NB1) der Funkfeststationen ein zulässiger Sendepegelbereich ermittelt wird in Abhängigkeit von dem ihr übermittelten Zielwert (TV1).

6. Verfahren nach Anspruch 1,
bei dem von einer Funkfeststationssteuerung an jede der Funkfeststationen Werte für einen zulässigen Sendepegelbereich übermittelt werden, und bei dem von jeder der Funkfeststationen ihr Zielwert in Abhängigkeit von den ihr übermittelten Werten ermittelt wird.

7. Verfahren (100) nach Anspruch 2,
bei dem von der Funkfeststationssteuerung (SRNC) der Zielwert (TV1) für jede (NB1) der Funkfeststationen berechnet wird in Abhängigkeit von einem Wert, der deren Verkehrslast in Abwärtsrichtung angibt und der von der Funkfeststation (NB1) ermittelt und an die Funkfeststationssteuerung (SRNC) übermittelt wird.

8. Verfahren nach Anspruch 2,
bei dem der Funkfeststationssteuerung (SRNC) der Zielwert (TV2) für jede (NB2) der Funkfeststationen berechnet wird in Abhängigkeit von einem Wert, der deren Verkehrslast in Abwärtsrichtung angibt und der von einer mit dieser Funkfeststation (NB2) unmittelbar verbundenen zweiten Funkfeststationssteuerung (CRNC2) ermittelt und an die erstgenannte Funkfeststationssteuerung (SRNC) übermittelt wird.

9. Funkfeststation (NB1) für ein Mobilkommunikationssystem (MTS), die fähig ist von einer Mobilstation (UE) einen Befehl (TPC) zu empfangen, der fähig ist die Funkfeststation (NB1) anzuweisen ihre Sendeleistung zu verändern, mit einem Speicher (MEM), in dem ein vorgebbarer Zielwert (TV1) für die Sendeleistung abgelegt ist, und mit einer damit verbundenen Sendeleistungssteuerung (PCR), die fähig ist aufgrund des Empfangs des Befehls (TPC) die Sendeleistung zu ändern, **dadurch gekennzeichnet dass** die Sendeleistungssteuerung fähig ist die Sendeleistung zusätzlich in Richtung des vorgebbaren Zielwerts (TV1) zu ändern.

10. Mobilkommunikationssystem (MTS) mit mindestens zwei Funkfeststationen (NB1, NB2), die fähig sind zumindest zeitweise gleichzeitig mit einer Mobilstation (UE) zu kommunizieren, wobei die Mobilstation (UE) fähig ist an die Funkfeststationen (NB1, NB2) einen Befehl (TPC) zu senden, der fähig ist die Funkfeststationen (NB1, NB2) anzuweisen, ihre Sendeleistung zu verändern, bei dem jede (NB1) der Funkfeststationen einen Speicher (MEM) enthält, in dem ein vorgebbarer Zielwert (TV1) für die Sendeleistung abgelegt ist, und eine damit verbundene Sendeleistungssteuerung (PCR) enthält, die fähig ist aufgrund des Empfangs des Befehls (TPC) die Sendeleistung zu ändern, daddurch **gekennzeichnet** dass die Sendeleistungssteuerung fähig ist die Sendeleistung zusätzlich in Richtung des vorgebbaren Zielwerts (TV1) zu ändern.

## Claims

1. Method (100) of changing the powers transmitted by at least two base stations (NB1, NB2) communicating simultaneously, at least some of the time, with a mobile station (UE) in a mobile communications system (MTS), wherein the mobile station (UE) sends to the base stations (NB1, NB2) a command (TPC) instructing the base stations (NB1, NB2) to change their transmitted powers (120); the transmitted power is changed in each (NB1) of the base stations in response to the command (TPC) (130); **characterized in that** on receiving the command, the transmitted power is additionally changed in each (NB1) of the base stations in the direction of a specifiable target value (TV1) (140).

2. Method (100) according to Claim 1,
wherein the target values (TV1, TV2) are determined by a base station controller (SRNC) and communicated to the base stations (NB1, NB2) (110).

3. Method according to Claim 2,
wherein the transmitted power is averaged over a period of time by the base station (NB1), and the resulting average transmitted power (APL) is continuously transmitted to the first base station controller (SRNC) to determine the target value (TV1) therefrom.

4. Method according to Claim 1,
wherein immediately after communication is established between the mobile station (UE) and one (NB2) of the base stations, said one base station (NB2) transmits radio signals at an initial power corresponding to the target value (TV2) for said base station (NB2).

5. Method according to Claim 2,
wherein a permissible transmit level range is determined by each (NB1) of the base stations depending on the target value (TV1) communicated to said base station (NB1).

6. Method according to Claim 1,
wherein a base station controller communicates values for a permissible transmit level range to each of the base stations, and each of the base stations determines the respective target value depending on the values communicated to said base station.

7. Method (100) according to Claim 2,
wherein the base station controller (SRNC) calculates the target value (TV1) for each (NB1) of the base stations, depending on a value specifying the traffic load carried by the base station (NB1) in the downstream direction, said value being determined by the base station (NB1) and communicated to the base station controller (SRNC).

8. Method according to Claim 2,
wherein the base station controller (SRNC) calculates the target value (TV2) for each (NB2) of the base stations, depending on a value specifying the traffic load carried by the base station (NB2) in the downstream direction, said value being determined by a second base station controller (CRNC2) which is connected directly to said base station (NB2) and communicated to the first-mentioned base station controller (SRNC).

9. Base station (NB1) for a mobile communications system (MTS), said base station (NB1) being capable of receiving from a mobile station (UE) a command (TPC) which is capable of instructing the base station (NB1) to change its transmitted power; with a memory (MEM), in which a specifiable target value (TV1) for the transmitted power is held; and with a transmitted power controller (PCR) which is connected to the memory (MEM), and which is capable of changing the transmitted power in response to the command (TPC); **characterized in that** the transmitted power controller is capable of changing the transmitted power additionally in the direction of the specifiable target value (TV1).

10. Mobile communications system (MTS) with at least two base stations (NB1, NB2), which are capable of communicating, simultaneously at least some of the time, with a mobile station (UE), the mobile station (UE) being capable of sending a command (TPC) to the base stations (NB1, NB2), said command being capable of instructing the base stations (NB1, NB2) to change their transmitted power; each (NB1) of the base stations containing a memory (MEM), in which a specifiable target value (TV1) for the transmitted power is held; and with a transmitted power controller (PCR) which is connected to the memory (MEM), and which is capable of changing the transmitted power in response to the command (TPC); **characterized in that** the transmitted power controller is capable of changing the transmitted power additionally in the direction of the specifiable target value (TV1).

## Revendications

1. Procédé (100) pour modifier la puissance d'émission dans au moins deux stations de base (NB1, NB2) qui communiquent simultanément au moins par intermittence avec une station mobile (UE) au sein d'un système de communication mobile (MTS), avec lequel une instructions (TPC) qui ordonne aux stations de base (NB1, NB2) de modifier leur puissance d'émission est envoyée (120) par la station mobile (UE) aux stations de base (NB1, NB2), avec lequel la puissance d'émission est modifiée (130) dans chacune (NB1) des stations de base en fonction d'une réception de l'instruction (TPC), **caractérisé en ce que** lors de la réception de l'instruction dans chacune (NB1) des stations de base, la puissance d'émission est en plus modifiée (140) en direction d'une valeur cible (TV1) pouvant être prédéfinie.

2. Procédé (100) selon la revendication 1, avec lequel les valeurs cibles (TV1, TV2) sont déterminées et transmises aux stations de base (NB1, NB2) par une commande de station de base (SRNC).

3. Procédé selon la revendication 2, avec lequel la station de base (NB1) calcule la moyenne de la puissance d'émission sur une période et la puissance d'émission moyenne (APL) qui en résulte est transmise continuellement à la première commande de station de base (SRNC) afin d'en déterminer la valeur cible (TV1).

4. Procédé selon la revendication 1 avec lequel, immédiatement après l'établissement de la communication entre la station mobile (UE) et l'une (NB2) des stations de base, celle-ci émet des signaux radioélectriques avec une puissance d'émission initiale qui correspond à la valeur cible (TV2) pour cette station de base (NB2).

5. Procédé selon la revendication 2, avec lequel chacune (NB1) des stations de base détermine une plage de niveaux d'émission autorisée en fonction de la valeur cible (TV1) qui lui est communiquée.

6. Procédé selon la revendication 1, avec lequel une commande de station de base transmet à chacune des stations de base des valeurs pour une plage de niveaux d'émission autorisée et avec lequel chacune des stations de base détermine sa valeur cible en fonction des valeurs qui lui sont transmises.

7. Procédé (100) selon la revendication 2, avec lequel la commande de station de base (SRNC) calcule la valeur cible (TV1) pour chacune (NB1) des stations de base en fonction d'une valeur qui indique sa charge de trafic dans le sens descendant et qui est déterminée par la station de base (NB1) et transmise à la commande de station de base (SRNC).

8. Procédé selon la revendication 2, avec lequel la commande de station de base (SRNC) calcule la valeur cible (TV2) pour chacune (NB2) des stations de base en fonction d'une valeur qui indique sa charge de trafic dans le sens descendant et qui est déterminée par une deuxième commande de station de base (CRNC2) reliée directement à cette station de base (NB2) et transmise à ladite première commande de station de base (SRNC).

9. Station de base (NB1) pour un système de communication mobile (MTS) qui est en mesure de recevoir de la part d'une station mobile (UE) une instruction (TPC), laquelle est en mesure d'ordonner à la station de base (NB1) de modifier sa puissance d'émission, comprenant une mémoire (MEM) dans laquelle est enregistrée une valeur cible (TV1) pouvant être prédéfinie pour la puissance d'émission et comprenant une commande de puissance d'émission (PCR) reliée à celle-ci qui est en mesure de modifier la puissance d'émission en fonction de la réception de l'instruction (TPC), **caractérisée en ce que** la commande de puissance d'émission est en mesure de modifier la puissance d'émission en plus en direction de la valeur cible (TV1) pouvant être prédéfinie.

10. Système de communication mobile (MTS) comprenant au moins deux stations de base (NB1, NB2) qui sont en mesure de communiquer simultanément au moins par intermittence avec une station mobile (UE), la station mobile (UE) étant en mesure d'envoyer aux stations de base (NB1, NB2) une instruction (TPC), laquelle est en mesure d'ordonner aux stations de base (NB 1, NB2) de modifier leur puissance d'émission, avec lequel chacune (NB1) des stations de base comprend une mémoire (MEM) dans laquelle est enregistrée une valeur cible (TV1) pouvant être prédéfinie pour la puissance d'émission et une commande de puissance d'émission (PCR) reliée à celle-ci qui est en mesure de modifier la puissance d'émission en fonction de la réception de l'instruction (TPC), **caractérisé en ce que** la commande de puissance d'émission est en mesure de modifier la puissance d'émission en plus en direction de la valeur cible (TV1) pouvant être prédéfinie.
